# EUROPEAN PATENT SPECIFICATION

(11) **EP 3 747 626 B1**
(45) Date of publication and mention of the grant of the patent: **27.03.2024**
(21) Application number: 19178359.6
(22) Date of filing: 05.06.2019
(51) Int. Cl.: B29C 70/38, B29C 53/00, B29C 53/56, B29C 53/58, B29C 53/60, B29C 53/62, B29C 53/82, B29C 53/84, B28B 23/14, B29C 70/00, B29C 70/08, B29C 70/32, B29K 101/12, B29L 31/00

(54) **METHOD TO PRODUCE A MULTI-LAYER COMPOSITE VESSEL, AND COMPOSITE VESSEL OBTAINED THEREOF**
VERFAHREN ZUR HERSTELLUNG EINES MEHRSCHICHTIGEN VERBUNDSTOFFBEHÄLTERS UND DARAUS HERGESTELLTER BEHÄLTER
PROCÉDÉ DE PRODUCTION D'UN RÉCIPIENT COMPOSITE MULTICOUCHES ET RÉCIPIENT COMPOSITE AINSI OBTENU

(43) Date of publication of application: 09.12.2020
(73) Proprietor: L'AIR LIQUIDE, S.A. pour l'étude et l'exploitation des procédés Georges Claude, 75007 Paris (FR); Covess N.V., 3510 Hasselt (BE)
(72) Inventor: GOUDALLE, Sébastien, 78350 LES LOGES EN JOSAS (FR); BLANC-VANNET, Pierre, 78350 LES LOGES EN JOSAS (FR); PAPIN, Philippe, 78350 LES LOGES EN JOSAS (FR); DEL-GALLO, Pascal, 78350 LES LOGES EN JOSAS (FR); VANSWIJGENHOVEN, Tony, BE-3510 Hasselt (BE); DE CLIPPELEIR, Johan, BE-3051 Sint-Joris-Weert (BE)
(74) Representative: Cabinet Camus Lebkiri

(56) References cited:
- EP-A1- 0 333 013
- EP-A1- 2 962 833
- WO-A1-2011/144234
- WO-A2-2016/131113

## Description

### TECHNICAL FIELD OF THE INVENTION

The technical field of the invention concerns leak tight vessels, particularly but not restrictively composite pressure vessels, and methods for producing composite vessels.

The invention relates more precisely to a method for producing a leak-tight vessel for storage of gas and/or liquid according to claim 1 and to a leak-tight vessel according to claim 12.

### TECHNOLOGICAL BACKGROUND

The use of fibre-reinforced polymer materials, that is materials comprising fibres impregnated with a polymer material, is well known in the manufacturing of pressure vessels as they are lighter and can withstand higher pressure than other materials.

State of the art leak-tight composite vessel or pressure composite vessels classically comprise, as disclosed in EP 2962833 A1, a polymer leak-tight barrier comprising a polymer material, for instance a thermoset material or a thermoplastic material, forming an inner surface of the vessel and preventing permeation of gases through the vessel wall, over which is applied a shell layer comprising a fibre-reinforced polymer material which ensure the mechanical integrity of the vessel. The leak-tight barrier and the shell layer form the wall of the pressure vessel.

The fibre-reinforced polymer material classically confers the pressure resistance to the vessel, but some brutal pressurization or depressurization can result in the detachment of the barrier layer from the shell layer.

And, although state of the art vessels are sufficient in classical application such as automotive application, or application which occur in stable and homogenous environment, they are insufficient in less favourable environment, i.e. in environment with several simultaneous constraints, for instance extreme temperature, large temperature variation, physical impact and/or chemical corrosion, etc, as they are not adapted to all the environmental constraints.

The structure of the shell layer of the state-of-the-art composite vessel are not optimized, which could result in unnecessary additional weight to the composite vessel. Also, the reinforced fibres represent the main cost in the manufacturing process of pressure vessels and as they are of a major importance in the mechanical resistance of the vessel, it is difficult to lower the cost or the weight of a pressure vessel by decreasing the quantity of fibres without degrading its mechanical properties.

The permeability of such pressure vessels is satisfactory to contain pressurized liquid or gas for a limited period of time but does not fulfil the long-term permeation requirement of some application, unless it has a very thick wall which could be disadvantageous in term of cost and in term of weight of the composite pressure vessel.

It is therefore difficult to decrease the permeation of a composite pressure vessel without increasing the thickness of the barrier layer, and therefore the weight and the cost of the composite vessel.

There is therefore a need to provide a composite vessel which could be used in different type of environment, i.e. to resist simultaneously to a plurality of environmental constraints and which meet a large panel of different application requirements.

### SUMMARY OF THE INVENTION

The invention offers a solution to the problems mentioned above by proposing a method for producing a leak tight vessel with a plurality of functional layers, each functional layer providing an answer to a use or to an environmental constraint.

According to one aspect of the invention, it is proposed a method for producing a leak-tight vessel for storage of gas and/or liquid, comprising at least one leak tight inner barrier layer comprising a heat-sealable thermoplastic material and a plurality of functional layers each comprising a fibre-reinforced heat-sealable thermoplastic material according to claim 1.

The method comprises, according to claim 1, the steps of:
a) forming the said at least one leak tight inner barrier layer;
b) forming the plurality of functional layers by winding successive functional tapes on said leak tight inner barrier, each functional layer comprising fibre-reinforced heat sealable thermoplastic material, wherein at least two functional layers of the plurality of functional layers comprise different fibre-reinforced thermoplastic materials and wherein the thermoplastic material of the at least one inner barrier layer and the thermoplastic materials of the functional layers have melting points situated in a 40°C temperature range, the 40°C temperature range being situated between 100 °C and 400 °C;
c) consolidating, for instance by means of applying heat, the functional layers and the at least one barrier layer thereby forming a monolithic consolidated wall structure with a continuity between the thermoplastic materials of the at least one barrier layer and the fibre-reinforced heat-sealable thermoplastic materials of the functional layers.

For instance, step c) of the method may be performed in parallel with step b), i.e. simultaneously.

It is therefore possible to produce a leak tight vessel having a wall comprising several functional layers, each answering to an environmental constraint. Although the obtained vessel structure comprises a plurality of layers, the choice of thermoplastic materials having melting points in a neighbouring temperature range, i.e. compatible or compatibilized thermoplastic material, permits advantageously that the obtained structure is a unified structure, or monolithic structure, which prevent a detachment of one or several layers from the barrier layer.

The winding of a current functional tape may be performed such as the successive windings of the current functional tape overlap over at least a lateral overlapping distance with a previous parallel winding of the current functional tape and a next parallel winding of the current functional tape thereby exerting pressure upon the at least one barrier layer, the previous windings of the current functional tape and/or the previously wound functional tapes so that the windings of the successive functional tapes are pressed tightly against the at least one barrier layer and against each other so that the materials of such successive windings can be consolidated at their contacting surfaces.

Thanks to such winding method, the consolidation can be performed without the formation of air bubble in the structure and confer a very low porosity value to the vessel.

According to an embodiment of the invention, the step of forming the inner barrier layer is achieved by winding of a barrier tape directly around a mandrel, thereby completely covering a predefined area of the rounded outer surface of the mandrel.

The winding of the at least one barrier tape may be applied such that the successive barrier tape windings overlap over at least a lateral overlapping distance with a previously wound parallel barrier tape winding and a next wound parallel barrier tape winding.

By winding the barrier around a mandrel instead of using, for instance, a liner bottle, the design of the barrier layer can be adapted, and specifically the thickness can be reduced, which is advantageous for vessels of great capacity, i.e. vessels with a volume superior to 50 litres depending on the dimensions of the cylinder. For instance, the barrier layer may be designed so as to have a thickness ranging from 250 micrometres up to several millimetres.

Moreover, this step of the method could be achieved by the same winding process as the one used for the winding of the functional layers, which is advantageous in term of continuity of the process. And, obtaining a barrier layer by such a method step is way faster than when using a liner bottle, because the use of a liner bottle requires a separate production process, and would require a long period of time, typically several days, between the blow moulding of the liner bottle and the winding of the functional layers, as the liner needs to completely shrink before being able to support a winding.

Step a) may comprise the formation of a plurality of barrier layers comprising successive windings of a plurality of barrier tapes around said mandrel, each barrier layer comprising a thermoplastic material, wherein at least two barrier layers of the plurality of barrier layers comprise different thermoplastic materials and wherein the thermoplastic materials of the plurality of inner barrier layers have melting points situated in the 40°C temperature range.

It is therefore possible to produce a leak tight vessel having a barrier layer comprising several layers, each answering to an application constraint.

At least one functional layer may comprise a fibre-reinforced thermoplastic material comprising a thermoplastic material and fibres, the ratio in weight between the quantity of thermoplastic material and the quantity of fibres in the fibre-reinforced thermoplastic material varying along the thickness of the at least one functional layer.

The step of forming the at least one functional layer may comprise the winding of a functional tape comprising the fibre-reinforced thermoplastic material, the functional tape having a ratio in weight between the quantity of fibres and the quantity of thermoplastic material varying along the tape.

It is therefore possible to produce a leak-tight vessel in which the ratio in weight between the quantity of fibres and the quantity of thermoplastic material varies continuously along the thickness of its wall. As the stress around the cylindrical vessel decreases with the distance from the inside of the vessel, the need of reinforced fibres is less important at the peripheral region of the vessel and it is therefore advantageous in term of cost and weight to adapt the quantity of reinforcement fibres to the effective need.

Two fibre-reinforced thermoplastic materials of two functional layers may comprise fibres from different materials.

Because each type of fibres has specific properties, it is advantageous to vary the nature of the fibres along the thickness of the wall. For instance, fibres with good resistance to pressures can be used for the layers closer to the inside of the vessel, and cheaper, less resistant fibres can be used for the peripheral layers of the vessel. It is also advantageous to choose fibres depending on other properties of the fibres such as temperature resistance, mechanical elongational properties, chemical resistance, abrasion resistance, impact resistance, etc.

Two fibre-reinforced thermoplastic materials of two functional layers may comprise different compatibilized thermoplastic materials.

Because each type of thermoplastic polymer material has specific properties, it is advantageous to vary the nature of the thermoplastic material along the thickness of the wall. For instance, thermoplastic can be chosen depending on properties such as temperature resistance, mechanical resistance, chemical resistance abrasion resistance, impact resistance, radiation resistance, etc.

Two fibre-reinforced thermoplastic materials of two functional layers may have different ratios in weight between their respective quantity of fibres and their respective quantity of thermoplastic material.

It is therefore possible to produce a leak-tight vessel in which the ratio in weight between the quantity of fibres and the quantity of thermoplastic material varies discontinuously along the thickness of its wall. As the stress around the cylindrical vessel decreases with the distance from the inside of the vessel, the need of reinforced fibres is less important at the peripheral region of the vessel and it is therefore advantageous in term of cost and weight to adapt the quantity of reinforcement fibres to the effective need.

The formation of at least two functional layers may comprise the winding of a multi-functional tape, the multi-functional tape comprising at least two functional tapes joined end to end, for instance by mirror welding, butt joining, or splicing.

It is advantageous from the point of view of the process efficiency to have previously joined the composite tapes. Indeed, one thus avoids one or more steps of tape change. It is therefore particularly advantageous that all the functional tapes are mutually joined.

According to another aspect of the invention and according to claim 12, it is proposed a leak-tight vessel produced by the above-mentioned method, wherein the barrier layer and functional layer of functional tape form a unitary rigid structure.

The leak-tight vessel may be a fuel tank for a motorized vehicle, for instance a ship, a train, a satellite, a rocket, etc.

Other features and advantages of the invention will become apparent from the description of embodiments of the invention, the scope of the invention being defined by the appended claims.

### BRIEF DESCRIPTION OF THE FIGURES

- Figure 1 shows a leak tight vessel according to an embodiment of the invention,
- figures 2 and 3 are cross-sectional views of the leak-tight vessel of figure 1,
- figures 4 to 7 show different steps of a method according to the invention,
- figures 8, 9 and 10 show cross sectional views of walls of pressure vessels according to different embodiments of the invention,

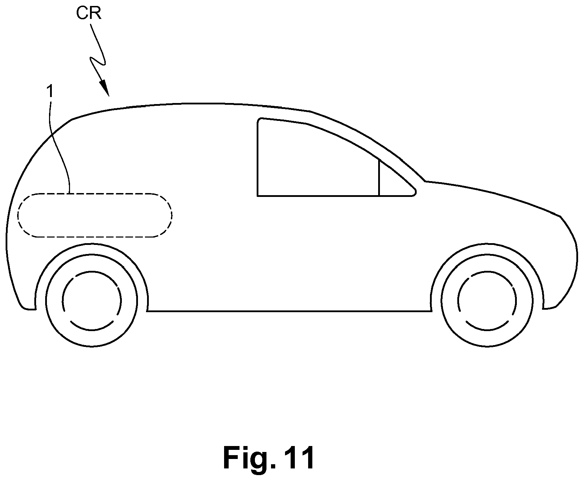

- figure 11 shows a car comprising a vessel according to an embodiment of the invention.

### DETAILED DESCRIPTION OF EMBODIMENTS OF THE INVENTION

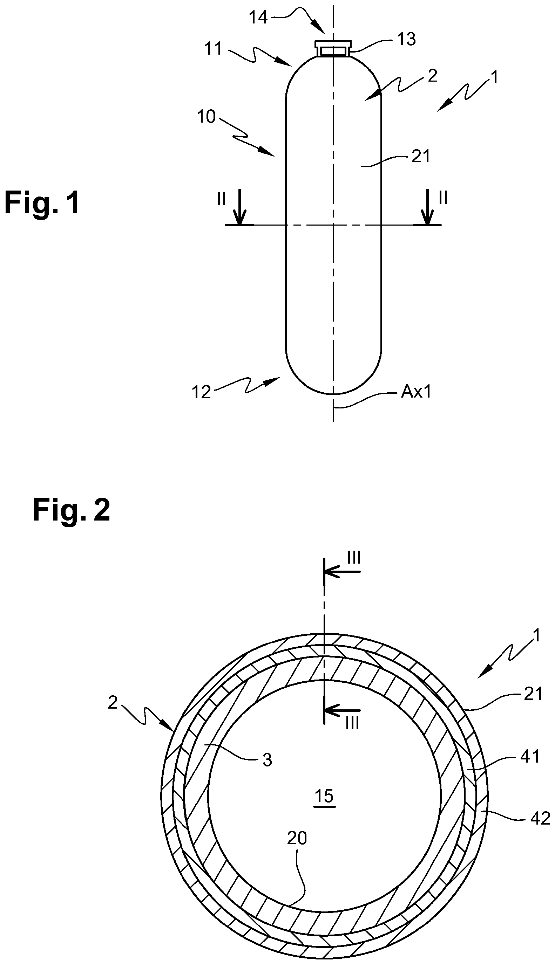

Figure 1 shows a cylindrical leak-tight vessel 1 produced by a method according an embodiment of the invention, and figure 2 is a cross section of the cylindrical leak-tight vessel 1 along the section line II-II of figure 1.

The leak-tight vessel 1 of this embodiment is a pressure vessel, for instance here a fuel tank of a motor vehicle such as a car, a bus or a truck, and able to contain liquid or gas such as liquefied petroleum gas (LPG), liquefied natural gas (LNG), natural gas for vehicle (NGV) or hydrogen. In this example, the vessel 1 has a 60 litres capacity.

These examples are in no way limiting, the invention being adapted for all sorts of vessel, such as fire extinguishers, oxygen tanks, etc.

The vessel 1 of this embodiment has a generally cylindrical body 10, a first generally hemispherical end portion 11 and a second generally hemispherical ends portions opposite to the first hemispherical end portion 11, such as it can be defined an axis of revolution Ax1 which is common to the generally cylindrical body 10 and to the two generally hemispherical opposite ends portions 11 and 12.

The first end portion 11 comprises a bottleneck 13 forming an opening 14 for the vessel 1.

The pressure vessel 1 comprises a wall 2 having an inner surface 20 delimiting the inner volume 15 of the vessel and an outer surface 21 opposite to the inner surface 20, that is to say an outer surface 21 delimiting the wall 2 from the outside of the pressure vessel 1.

The wall 2 of the vessel 1 comprises a plurality of layers, here one leak-tight inner barrier layer 3, a first functional layer 41 and a second functional layers 42 arranged concentrically around the barrier layer 3. Each functional layer 41, 42 fulfils at least one specific function. The leak-tight inner barrier layer 3 of this embodiment is 3 millimetres thick, comprises a barrier thermoplastic material 60 and forms the inner surface 20. The barrier layer 3 is characterized by a very low permeability rate, for instance here 10⁻¹⁸ mol/s.Pa.m. The thickness of the leak-tight inner barrier layer 3 could have any other value, for instance a value comprised between 1 and 3 millimetres.

The first functional layer 41 comprises a first fibre-reinforced thermoplastic material and is arranged on and around the barrier layer 3. The function of the first functional layer 41 is in this embodiment to confer the vessel 1 a good mechanical resistance, mainly to internal pressure but also to external pressure.

The second functional layer 42 comprises a second fibre reinforced thermoplastic material and is arranged on and around the first functional layer 41. In this embodiment, the second functional layer 42 is the outer layer of the wall 2 and forms the outer surface 21. The function of the second functional layer is to confer the vessel good impact resistance, but the second functional layer 42 also contributes to increase the resistance to pressure.

Although the wall 2 of the vessel 1 comprises several layers, its structure is monolithic, that is to say there is a continuity of materials along the thickness of the wall 2, and specifically a continuity between the different compatibilized thermoplastic materials.

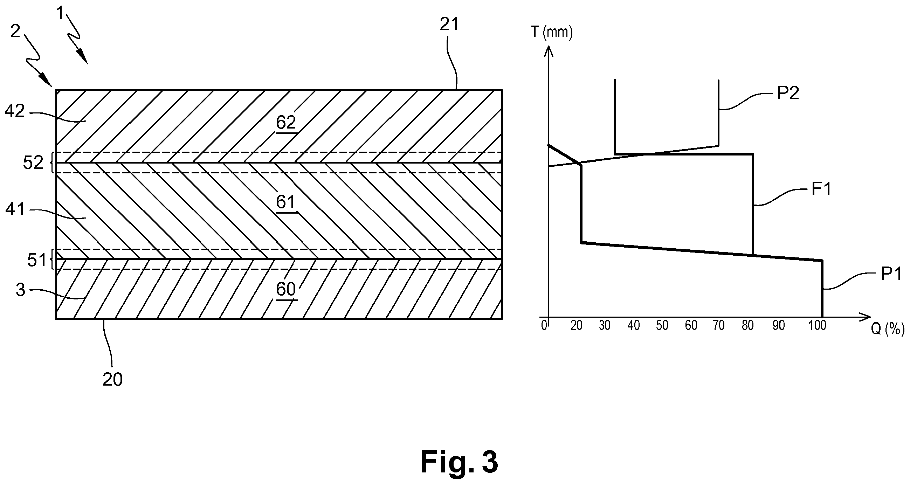

Figure 3 is a cross-sectional view of the vessel 1 along cross-section line III-III of figure 2 with a diagram showing the nature and quantities Q of the materials comprised in the wall 2 along its thickness T.

As shown on figure 3, the barrier layer 3 has a 3 millimetres thickness and comprises the barrier thermoplastic material 60, for instance in this embodiment polyamide-6. The quantity of polyamide-6 is represented by the curve having the reference P1.

The first functional layer 41 has a thickness of 25 millimetres and the first fibre-reinforced thermoplastic material 61 comprise 20% of polyamide-6 reinforced with 80% of carbon fibres in weight. The quantity of carbon fibres is illustrated by the curve having the reference F1.

The second functional layer 42 has a thickness of 15 millimetres and the second fibre-reinforced thermoplastic material 62 comprises 70% of a copolymer of polyamide-6 and a compatibilized polyolefin, reinforced with 30% of carbon fibres in weight. The quantity of copolymer of polyamide-6 and polyolefin is illustrated by the curve having the reference P2.

The barrier layer 3 of this embodiment could have included different thermoplastic materials having similar properties, specifically a thermoplastic material with a close melting point. For instance, the thermoplastic materials may be chosen among various polyamide chemistries such as polyamide-6 (PA6), polyamide-66 (PA66), polyamide-12 (PA12), polyphthalamide (PPA), polyamide-imide (PAI), etc. The thermoplastic materials may also be chosen among polyolefins or they may be chosen among high performance polymers such as polyimide (PI), polyphenylene sulfide (PPS), PolyEtherEtherKetone (PEEK), polyaryletherketone (PEAK), polyphthalamide (PPA), polyphenylsulfone (PPSU), liquid-crystal polymer (LCP), etc.

The thermoplastic material may also be chosen among amorphous polymers, semi-crystalline polymers or elastomers.

Although the layers 3, 41 and 42 have been drawn so that they appear very distinctively on figure 3, there is in fact a continuity of material between each adjacent layer, in such way that the interfaces between each adjacent layer comprise a 1 millimetre thick interface region which comprises a compatibilized thermoplastic system present to bond the adjacent layers. The thicknesses of the interface regions could have other values.

For instance, in this embodiment, the wall 2 of the pressure vessel 1 comprises a first interface region 51 between the barrier layer 3 and the first functional layer 41, and a second interface region 52 between the first functional layer 41 and the second functional layer 42.

Since both the barrier layer 3 and the first functional layer 41 comprise the same thermoplastic material, i.e. polyamide-6, the first interface region 51 only comprises polyamide-6 as the thermoplastic material and the transition between the barrier layer 3 and the first layer 41 is characterized by the change in fibres quantity, i.e. by the transition from a fibre-free layer to a fibre-reinforced layer.

A second interface region 52 is characterized by a compatibilized thermoplastic system of polyamide-6 and copolymer of polyamide 6 and polyolefin forming a progressive change in the nature of the thermoplastic material, and a change in the quantity of carbon fibres.

Such a monolithic structure allows the vessel to withstand pressures greater than 1000 bars and allows to avoid mutual detachment of the layers 3, 41, 42, for instance in case of a brutal depressurization of the vessel.

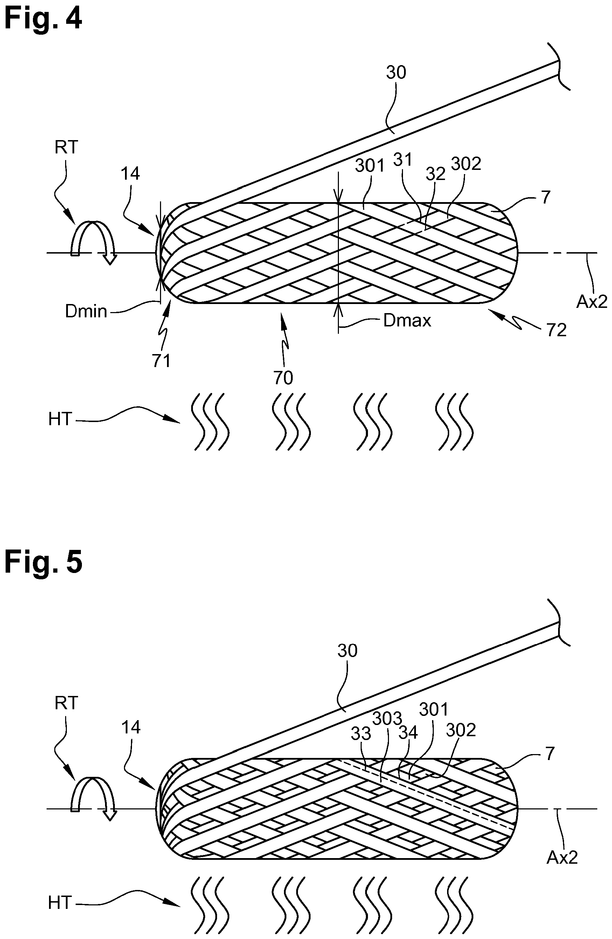

The production of the pressure vessel 1 having such a monolithic structure is performed according to a process described below in connection with figures 4 to 9, comprising the winding of a continuous barrier tape 30 and of two continuous functional tapes, and a while simultaneously applying heat HT on the wounded tape, in order to perform a consolidation of the barrier tapes and the functional tapes.

It is therefore advantageous that the thermoplastic materials of the barrier tape 30 and of the two functional tapes are selected as to have melting points that are compatible during the consolidation steps as described hereafter. More preferably their softening and/or melting points should be compatible, i.e. situated in the same or neighboring temperature ranges to enable a smooth consolidation. According to the invention, the temperature range is 40°C.

A first step of the process for producing the vessel 1 comprises the formation of the barrier layer 3.

The barrier layer 3 may be produced before the winding process in the form of a thermoplastic liner bottle produced according to known processes, for instance by moulding. In such case, the liner bottle forms a mandrel around which the plurality of functional tapes is wound.

Alternatively, the barrier layer 3 can be produced by the winding of a thermoplastic tape 30 according to the winding process described below. In this last case, the barrier tape 30 is wound around a removable mandrel, i.e. a metallic mandrel that can be taken into pieces that are removed at the end of the process through an opening in the vessel, and the plurality of functional layer are wound around the barrier layer 3. An example of such a removable mandrel is described in the patent published under the publication number EP 2571671 B1.

Figure 4 shows a first stage of the step of forming the barrier layer 3, in which the barrier tape 30 comprising polyamide-6 is wounded around a rotating mandrel 7, for instance here a removable mandrel to which is applied a rotational movement RT. The thickness of the barrier tape 30 is 200 micrometres, but it would be possible to use a barrier tape having a different thickness, for instance a thickness comprised between 50 and 400 micrometres.

The width of the barrier tape of this embodiment is 2 centimetres, but it would be possible to use a barrier tape having a different width, for instance a width comprised between 2 and 10 centimetres.

The dimension of the tapes may be chosen depending on the vessel dimension and the man skilled in the art will know how to choose the proper dimension depending on the applications of the invention.

The mandrel 7 of this embodiment has a generally cylindrical body 70 and two generally hemispherical opposite end portions 71 and 72. It can therefore be defined, an axis of revolution Ax2 for the mandrel 7 which is common to the generally cylindrical body and to the two generally hemispherical opposite ends portions 71 and 72. The axis of revolution Ax2 forms an axis of rotation for the rotating mandrel 7. The axis Ax2 of the mandrel will form the axis Ax1 of the vessel 1 at the end of the process.

Thus, the mandrel 7 of this embodiment has a monotonically decreasing diameter D, ranging from Dmax at is equatorial down to Dmin at its opposites ends. Although this is not absolutely required for tape winding, it advantageously avoids pressure concentration.

In order for the removable mandrel 7 to be removed at the end of the process, the barrier tape 30 is wound around the mandrel by leaving the opening 14 through which the mandrel will be taken off at the end of the process.

It should be noted here that during the manufacturing process of the container, the bottleneck 13 of the vessel 1 will be placed at the opening 14. This process step can be carried out for example directly after the winding of the barrier layer 3, between the windings of the two functional layers 41, 42 or after the windings of the functional layer, before consolidation of the container. This step is not described here for simplification purposes. This process step is described with more details in the patent application published under the publication number EP2571671B1.

The barrier tape 30 is applied as a single continuous tape according to an inter-weaving pattern and comprises therefore overlapping portions, for instance the overlapping portions 31, 32 resulting from the crossing of two separate winding 301, 302 of the continuous tape 30, resulting of the successive winding of the continuous barrier tape 30 around the mandrel 7. The portion 31 belongs to the windings 301 and the portion 32 belongs to the winding 302.

Figure 5 shows a later stage of the winding of the barrier tape 30, in which the barrier tape 30 is wound in order to form parallelly overlapping portions, for instance the parallelly overlapping portion 33 and 34 resulting from the overlapping of two separate parallel windings 301, 303 of the continuous tape 30. The portion 31 belongs to the winding 303 and the portion 34 belong to the winding 301.

It should be noted here that the portion 32 is located between the two parallelly overlapping portion 33 and 34.

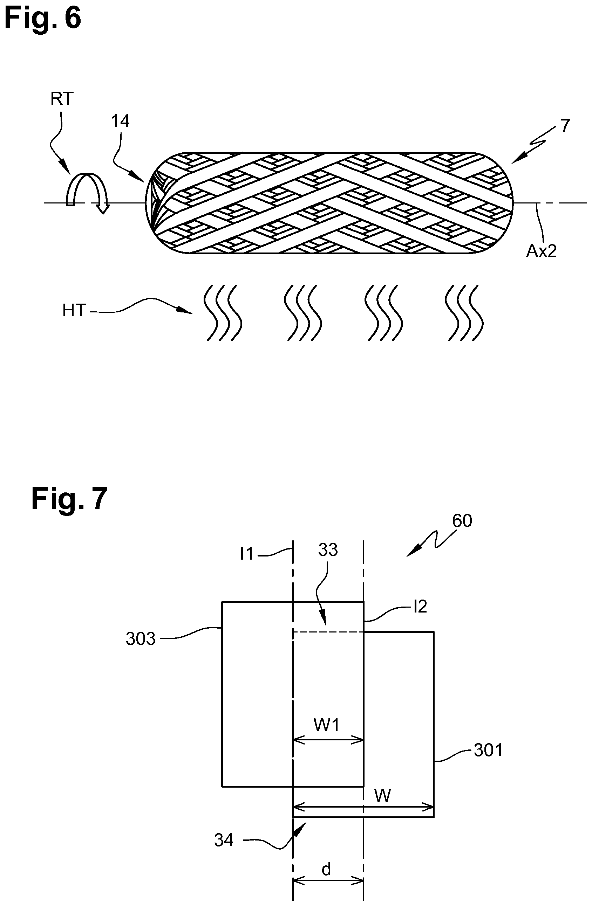

Figure 6 shows a stage of the winding of the barrier tape 30 in which all the surface of the mandrel 7 has been covered once by the continuous tape 30. It should be noted that the stage shown on figure 6 is not necessarily the final stage of the step of forming the barrier layer 3, as the stages shown on figure 4 to 6 can be repeated one or several time with the same continuous barrier tape 30, in order to confer a more important thickness to the barrier layer, and therefore increasing its impermeability.

The number of repetitions of the stages shown on figures 4 to 6 depends on the working pressure targeted and standards associated. The man skilled in the art will know how to choose the proper number of repetitions, i.e. the thickness of the wall of the pressure vessel depending on the application.

Figure 7 shows in more detail the two parallelly overlapping portions 33 and 34 of figure 5. The figure also shows the width W of the continuous tape 30, the predefined minimum overlapping distance W1 of the two separate parallel winding 301 and 303, that is to say the width of the overlapping portions 33, 34, expressed as a percentage of the width W, the center-lines 11, l2 of the overlapping portions, and the distance d between the center-lines l1, l2. When the distance d between the center-lines l1, l2 approaches zero, the lateral overlapping distance W1 approaches 100% of the complete width W of the continuous tape 60.

In this embodiment, the lateral overlapping distance W1 is 50% of the width W, as it permits to obtain a good consolidation of the different portions and to cover a large surface of the mandrel 7 while using a reasonable length of the continuous tape, that is to say while preserving costs. However, in order to leave the opening 14 unwounded, the lateral overlapping distance W1 is smaller at the equator 73, chosen to be approximately 50% of the tape width W in this case, where the distance d between the center lines l1, l2 is larger. The overlapping distance W1 is larger (close to W) near the opening 14 where the distance d between the center lines l1, l2 is smaller (close to zero).

During the winding of the tape 30, pressure is applied upon the wound tapes 30 in order to press all the overlapping portions to the mandrel 7 and to each other, so that the contacting layers of overlapping portions can be consolidated without the formation of air bubbles in the structure.

The barrier tape 30 is applied in such way that it covers the whole surface of the mandrel 7.

In further step of the method, two continuous functional tapes are successively wound around the wounded barrier tape and each other, following the stages of the first step described above in connection to figure 4 to 7.

For instance, in this embodiment, a first functional tape comprising the first fibre-reinforced thermoplastic 61 material is wound around the previously wound continuous barrier tape 30, and a second continuous functional tape comprising the second fibre-reinforced thermoplastic material 62 is then wound around the previously wound first continuous functional tape. The two functional tapes of this embodiment have a thickness of 200 micrometres, but it would be possible to use functional tapes having different thicknesses, and/or having thicknesses different from each other, for instance thicknesses ranging from 80 micrometres to 260 micrometres.

The widths of the functional tapes of this embodiment are 5 millimetres, but it would be possible to use functional tapes having different widths, for instance widths ranging from 5 millimetres and 100 millimetres.

The dimensions of the tapes may be chosen depending on the vessel dimension and the man skilled in the art will know how to choose the proper dimensions depending on the applications of the invention.

In this embodiment, the barrier tape 30 and the two functional tapes have the same width and are wound with the same overlapping distances. However, it would be possible to realise the different layers 3, 41, 42 with tapes having different width and using different overlapping distances.

Alternatively, the two functional tapes could have been joined end to end before winding in order to form a single continuous multi-functional tape wound according to the previously described step. The end-to-end junction can be performed by any known process, for instance by mirror welding, butt junction or splicing.

The two functional tapes 41, 42 are wound so as to cover the whole surface of the barrier layer 3. It would be however possible to wound the functional tapes so as to cover partially the barrier layer 3.

The last step of the process comprises a cooling of the vessel 1 at ambient temperature.

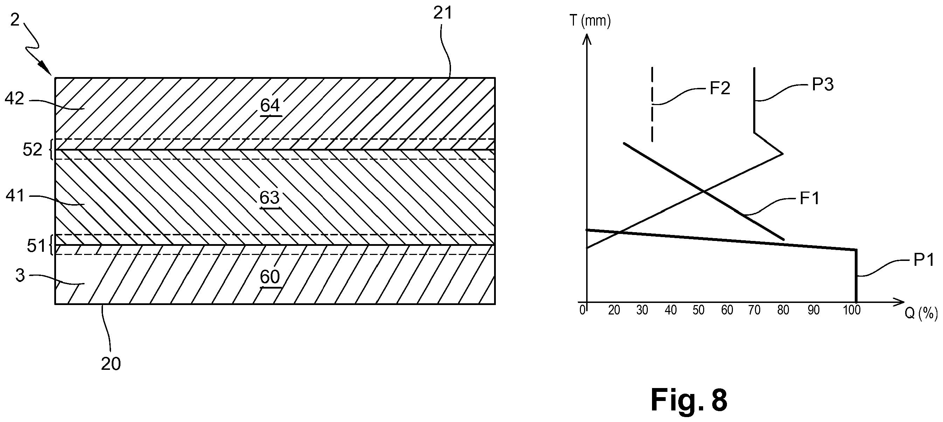

Although it has been described a vessel 1 comprising two functional layers comprising respectively a first fibre-reinforced thermoplastic material 61 and a second fibre-reinforced thermoplastic material 62 having a constant content of fibres and thermoplastic material, it would be possible, as shown in figure 8, that one of the functional layers has a content of fibres and thermoplastic which varies continuously along the thickness of the material.

In this embodiment, the barrier layer 3 comprises the barrier thermoplastic material 60, the first functional layer 41 comprises a third fibre-reinforced thermoplastic material 63 comprising high modulus carbon fibres and polyamide-12, and the second functional layer comprises a fourth fibre-reinforced thermoplastic material 64 comprising S-glass fibres and polyamide-12. The quantity of polyamide-12 is represented by the curve having the reference P3 and the quantity of S-glass fibre is represented by the curved having the reference F2.

The function of the first functional layer 41 of this embodiment is to confer the vessel 1 a good mechanical resistance, i.e. a good resistance to internal and external pressure, and the function of the second functional layer 42 is in this embodiment to confer the vessel 1 good impact resistance.

The quantity of high modulus carbon fibres near the first interface region 51 represents 20% of the third fibre-reinforced thermoplastic material 63 and increase continuously along the thickness of the first functional layer 41, until it reaches 80% near the second interface region 52.

Therefore, the quantity of polyamide-12 near the first interface region 51 represents 80% of the third fibre-reinforced thermoplastic material 63 and decreases continuously along the thickness of the first functional layer, until it reaches 20% near the second interface region 52.

This structure of the first functional layer 41 can be achieved by using a functional tape having a ratio in weight between the quantity of fibre and the quantity of thermoplastic material varying continuously along the length of the tape.

The fourth fibre-reinforced thermoplastic material 64 has a constant ratio in weight of S-glass fibres and polyamide-12, here 30% of S-glass fibres and 70% of polyamide-12.

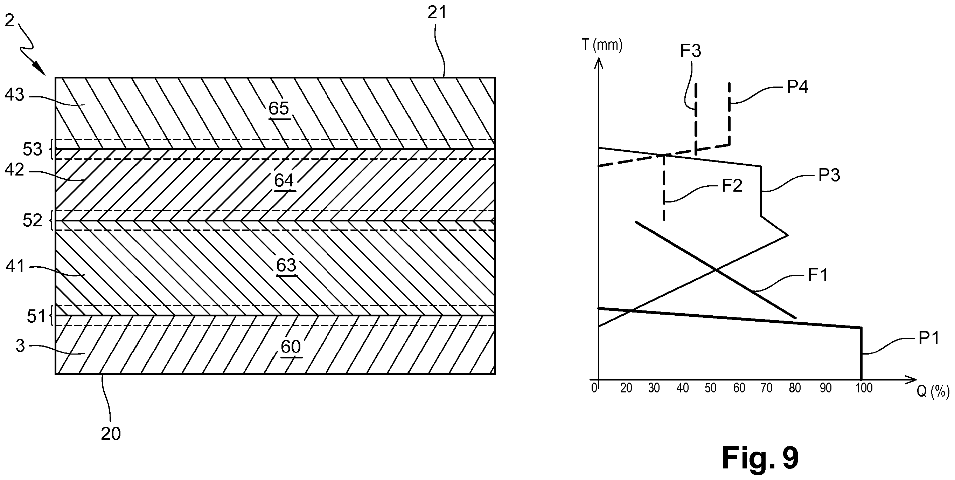

The number of functional layers is not limited by the embodiments described above. According to an embodiment shown on figure 9, the wall 2 of the vessel 1 comprises three functional layers 41, 42, 43. Compared to the embodiment previously described in connection to figure 8, the wall 2 of the vessel 1 comprises a third functional layer 43 comprising a fifth fibre-reinforced thermoplastic material 64 and forming the outer surface 21. The fifth fibre-reinforced thermoplastic material comprises 40% of EC-R-glass fibres and 60% of polypropylene. The quantity of EC-R glass fibres is represented by the curve having the reference F3 and the quantity of polypropylene is represented by the curved having the reference P4.

The function of the third functional layer is here to confer the vessel a good resistance to acid environment.

The method to produce such a vessel comprising three layers is similar to the method described above in connection with the figures 4 to 8. More precisely, the winding of each layer is made according to the method described above in connection with figures 4 to 8.

This process comprises in this embodiment the successive windings of one barrier layer and three functional tapes but may alternatively comprise the winding of at least one continuous multi-functional tape resulting from the junction end-to end of two of the functional tapes or the three functional tapes.

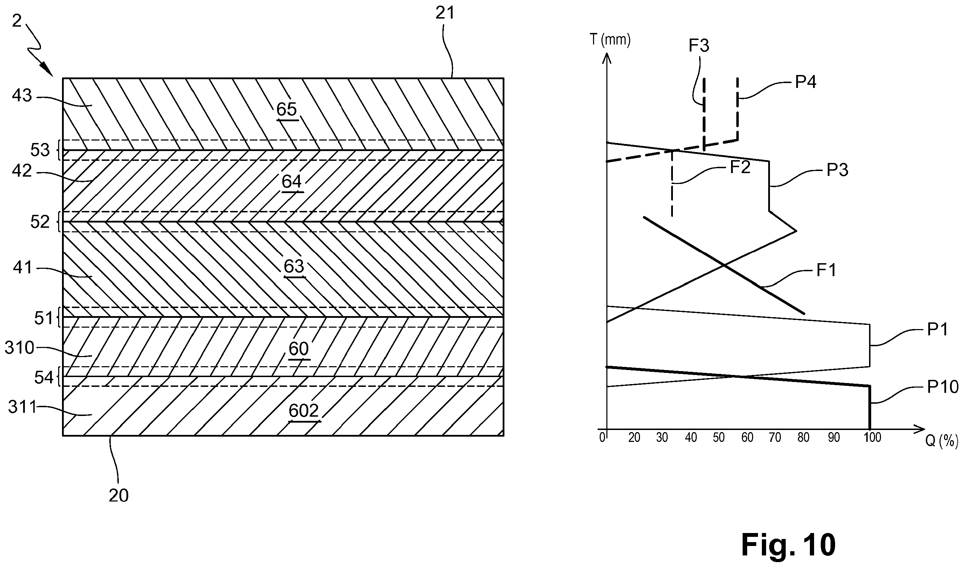

According to an alternative compatible with the previously described embodiments illustrated on figure 10, the vessel 1 comprises several barrier layers, for instance here a first barrier layer 310 and a second barrier layer 311.

This embodiment is similar to the previously described embodiment illustrated by figure 9, and only differs from the embodiment described in connection with figure 9 in that it comprises two barrier layers 310, 311.

The first barrier layer 310 has a 3 millimetres thickness and comprises the barrier thermoplastic material 60, i.e. polyamide-6. The quantity of polyamide-6 is represented by the curve having the reference P1. The function of the first barrier layer 310 is here to confer the vessel an impermeability to gases.

The second barrier layer 311 has a 3 millimetres thickness and comprises a different barrier thermoplastic material 602, for instance in this embodiment polyamide-12. The quantity of polyamide-12 is represented by the curve having the reference P10. The function of the second barrier layer 311 is here to improve the compatibilization between the first barrier layer 310 and the first functional layer 41.

The wall 2 of the pressure vessel 1 comprises a 1 millimetre thick fourth interface region 54 between the first barrier layer 310 and the second barrier layer 311, which comprises a compatibilized thermoplastic system present to bond the adjacent first barrier layer and second barrier layer.

The first barrier layer 310 and the second barrier layer 311 are obtained following the winding process described above in connection to figure 4 to 7

The pressure vessel according to the invention can be used in all sorts of applications and integrated in all sort of systems, such as vehicles, in particular trains, aircrafts, trucks, buses, and/or for all type application such as fuel tank, oxygen tank, fire extinguishing system, cooling or heating system, storage of industrial gases, etc.

Figure 10 shows a specific example of an application of a pressure vessel 1 according to the invention, in the form of a fuel tank of a car CR.
The different embodiments described above can be easily combined. Particularly, the functional layers of the different embodiments can be interchanged or combined, this being also true for the functional layers from a same embodiment.
And, although it has been described a barrier layer and several functional layer each produced by the winding of one continuous tape, it is entirely possible that one single layer of a pressure vessel 1 according to the invention is produced by the winding of several identical continuous tapes.

## Claims

1. Method for producing a leak-tight vessel (1) for storage of gas and/or liquid, comprising at least one leak tight inner barrier layer (3) comprising a heat-sealable thermoplastic material (60) and a plurality of functional layers (41, 42) each comprising a fibre-reinforced heat-sealable thermoplastic material (61, 62), comprising the steps of:
a) forming said at least one leak tight inner barrier layer (3);
b) forming the plurality of functional layers (41, 42) by winding successive functional tapes on said leak tight inner barrier, each functional layer (41, 42) comprising a fibre-reinforced heat sealable thermoplastic material, wherein at least two functional layers (41, 42) of the plurality of functional layers comprise different fibre-reinforced thermoplastic materials (61, 62) and wherein the thermoplastic material (P1) of the at least one inner barrier layer (3) and the thermoplastic materials of the functional layers (P1, P2) have melting points situated in a 40°C temperature range, the 40°C temperature range being situated between 100 °C and 400 °C ;
c) consolidating the functional layers (41, 42) and the at least one barrier layer (3) thereby forming a monolithic consolidated wall (2) structure with a continuity between the thermoplastic materials (60) of the barrier layer (3) and the fibre-reinforced heat-sealable thermoplastic materials (61, 62) of the functional layers (41,42).

2. Method according to claim 1, wherein the winding of a current functional tape (30) is being performed such as the successive windings of the current functional tape overlap over at least a lateral overlapping distance (W1) with a previous parallel winding of the current functional tape and a next parallel winding of the current functional tape thereby exerting pressure upon the at least one barrier layer (3), the previous windings of the current functional tape and/or the previously wound functional tapes so that the windings of the successive functional tapes are pressed tightly against the barrier layer (3) and against each other so that the materials of such successive windings can be consolidated at their contacting surfaces.

3. Method according to claim 1 or 2, wherein the step a) of forming the at least one inner barrier layer (3) is achieved by winding of at least one barrier tape (30) directly around a mandrel (7), thereby completely covering a predefined area of the rounded outer surface of the mandrel.

4. Method according to claim 3, wherein the winding of the barrier tape is applied such that the successive barrier tape windings overlap over at least a lateral overlapping distance with a previously wound parallel barrier tape winding and a next wound parallel barrier tape winding.

5. Method according to claim 3 or 4, wherein step a) comprises the formation of a plurality of barrier layers (310, 311) comprising the successive winding of a plurality of barrier tapes around said mandrel, each barrier layer comprising a thermoplastic material (60, 602), wherein at least two barrier (310, 311) layers of the plurality of barrier layers comprise different thermoplastic materials (60, 602) and wherein the thermoplastic materials (60, 602) of the plurality of barrier (310, 311) layers have melting points situated in the 40°C temperature range.

6. Method according to any of claims 1 to 5, wherein at least one functional layer (41) comprises a fibre-reinforced thermoplastic material comprising a thermoplastic material and fibres, the ratio in weight (Q) between the quantity of thermoplastic material and the quantity of fibres in the fibre-reinforced thermoplastic material varying along the thickness (T) of the at least one functional layer (41).

7. Method according to claim 6, wherein the step of forming the at least one functional layer comprises the winding of a functional tape comprising the fibre-reinforced thermoplastic material, the functional tape having a ratio in weight between the quantity of fibres and the quantity of thermoplastic material varying along the tape.

8. Method according to claim 1 to 7, wherein two fibre-reinforced thermoplastic materials (63, 64) of two functional layers (41, 42) comprise fibres from different materials.

9. Method according to claim 1 to 8, wherein two fibre-reinforced thermoplastic materials (63, 64) of two functional layers (41, 42) comprise different thermoplastic materials.

10. Method according to claim 1 to 9, wherein two fibre-reinforced thermoplastic materials (64, 64) of two functional layers (42, 43) have different ratios (Q) between their respective quantity of fibres and their respective quantity of thermoplastic material.

11. Method according to any of claim 1 to 10, wherein the formation of at least two adjacent functional layers comprise the winding of a multi-functional tape, the multi-functional tape comprising at least two functional tapes joined end to end.

12. Leak tight vessel **characterized in that** it is produced according to any of the methods recited in any of the previous claims, wherein the barrier layer (3) and the functional layers (41, 42) form a unitary rigid structure.

13. Leak-tight vessel according to claim 12, the pressure vessel being a fuel tank for a motorized vehicle (CR).

## Patentansprüche

1. Verfahren zur Herstellung eines dichten Behälters (1) für die Lagerung von Gas und/oder Flüssigkeit, der mindestens eine innere dichte Barriereschicht (3) mit einem heißsiegelbaren thermoplastischen Material (60) und eine Vielzahl von Funktionsschichten (41, 42) umfasst, die jeweils ein faserverstärktes heißsiegelbares thermoplastisches Material (61, 62) umfassen, wobei das Verfahren die folgenden Schritte umfasst:
a) Bildung der mindestens einen inneren dichten Barriereschicht (3);
b) Bildung der Vielzahl von Funktionsschichten (41, 42) durch Aufwickeln aufeinanderfolgender Funktionsstreifen auf die dichte innere Barriere, wobei jede Funktionsschicht (41, 42) ein faserverstärktes, heißsiegelbares thermoplastisches Material umfasst, in dem mindestens zwei Funktionsschichten (41, 42) der Vielzahl von Funktionsschichten unterschiedliche faserverstärkte thermoplastische Materialien (61, 62) umfassen und das thermoplastische Material (P1) der mindestens einen inneren Barriereschicht (3) und die thermoplastischen Materialien der Funktionsschichten (P1, P2) Schmelzpunkte in einem Temperaturbereich von 40 °C aufweisen, wobei der Temperaturbereich von 40 °C zwischen 100 °C und 400 °C liegt;
c) Verfestigung der Funktionsschichten (41, 42) und der mindestens einen Barriereschicht (3), wodurch eine monolithisch verfestigte Wandstruktur (2) mit einer Kontinuität zwischen den thermoplastischen Materialien (60) der Barriereschicht (3) und den faserverstärkten, heißsiegelbaren thermoplastischen Materialien (61, 62) der Funktionsschichten (41, 42) gebildet wird.

2. Verfahren nach Anspruch 1, bei dem das Aufwickeln eines aktuellen Funktionsstreifens (30) so durchgeführt wird, dass aufeinanderfolgende Wicklungen des aktuellen Funktionsstreifens über mindestens einen seitlichen Überlappungsabstand (W1) eine vorherige parallele Wicklung des aktuellen Funktionsstreifens und eine nachfolgende parallele Wicklung des aktuellen Funktionsstreifens überlappen, wodurch auf die mindestens eine Barriereschicht (3), die vorhergehenden Wicklungen des aktuellen Funktionsstreifens und/oder die zuvor gewickelten Funktionsstreifen Druck ausgeübt wird, so dass die Wicklungen der aufeinanderfolgenden Funktionsstreifen eng gegen die Barriereschicht (3) und gegeneinander gepresst werden, so dass die Materialien dieser aufeinanderfolgenden Wicklungen an ihren Kontaktflächen verfestigt werden können.

3. Verfahren nach Anspruch 1 oder 2, in dem der Schritt a) zur Bildung der mindestens einen inneren Barriereschicht (3) durch Aufwickeln mindestens eines Barrierestreifens (30) direkt um einen Dorn (7) erfolgt, wodurch ein vordefinierter Bereich der abgerundeten Außenfläche des Dorns vollständig bedeckt wird.

4. Verfahren nach Anspruch 3, in dem das Aufwickeln des Barrierestreifens so angewendet wird, dass aufeinanderfolgende Aufwicklungen des Barrierestreifens über mindestens einen seitlichen Überlappungsabstand eine zuvor gewickelte parallele Barrierestreifenwicklung und eine nachfolgend gewickelte parallele Barrierestreifenwicklung überlappen.

5. Verfahren nach Anspruch 3 oder 4, in dem der Schritt a) das Bilden einer Vielzahl von Barriereschichten (310, 311) umfasst, die das aufeinanderfolgende Wickeln einer Vielzahl von Barrierestreifen um den Dorn umfassen, wobei jede Barriereschicht ein thermoplastisches Material (60, 602) umfasst, in dem mindestens zwei Barriereschichten (310, 311) der Vielzahl von Barriereschichten unterschiedliche thermoplastische Materialien (60, 602) umfassen und die thermoplastischen Materialien (60, 602) der Vielzahl von Barriereschichten (310, 311) Schmelzpunkte im Temperaturbereich von 40 °C haben.

6. Verfahren nach einem der Ansprüche 1 bis 5, in dem mindestens eine Funktionsschicht (41) ein faserverstärktes thermoplastisches Material umfasst, das ein thermoplastisches Material und Fasern umfasst, wobei das Gewichtsverhältnis (Q) zwischen der Menge an thermoplastischem Material und der Menge an Fasern in dem faserverstärkten thermoplastischen Material entlang der Dicke (T) der mindestens einen Funktionsschicht (41) variiert.

7. Verfahren nach Anspruch 6, in dem der Schritt des Bildens der mindestens einen Funktionsschicht das Aufwickeln eines Funktionsstreifens umfasst, der das faserverstärkte thermoplastische Material umfasst, wobei der Funktionsstreifen ein Gewichtsverhältnis zwischen der Menge an Fasern und der Menge an thermoplastischem Material aufweist, das entlang des Streifens variiert.

8. Verfahren nach Anspruch 1 bis 7, in dem zwei faserverstärkte thermoplastische Materialien (63, 64) von zwei Funktionsschichten (41, 42) Fasern aus unterschiedlichen Materialien umfassen.

9. Verfahren nach Anspruch 1 bis 8, in dem zwei faserverstärkte thermoplastische Materialien (63, 64) von zwei Funktionsschichten (41, 42) unterschiedliche thermoplastische Materialien umfassen.

10. Verfahren nach Anspruch 1 bis 9, in dem zwei faserverstärkte thermoplastische Materialien (64, 64) von zwei Funktionsschichten (42, 43) unterschiedliche Verhältnisse (Q) zwischen ihrer jeweiligen Menge an Fasern und ihrer jeweiligen Menge an thermoplastischem Material aufweisen.

11. Verfahren nach einem der Ansprüche 1 bis 10, in dem die Bildung von mindestens zwei benachbarten Funktionsschichten das Aufwickeln eines Multifunktionsstreifens umfasst, wobei der Multifunktionsstreifen mindestens zwei Funktionsstreifen umfasst, die Ende an Ende miteinander verbunden sind.

12. Dichter Behälter, **dadurch gekennzeichnet, dass** er nach einem der Verfahren nach einem der vorhergehenden Ansprüche hergestellt wird, in dem die Barriereschicht (3) und die Funktionsschichten (41, 42) eine einheitliche starre Struktur bilden.

13. Dichter Behälter nach Anspruch 12, wobei der Druckbehälter ein Kraftstofftank für ein motorisiertes Fahrzeug (CR) ist.

## Revendications

1. Procédé de fabrication d'un récipient (1) étanche pour le stockage de gaz et/ou de liquide, comprenant au moins une couche barrière interne étanche (3) comprenant un matériau thermoplastique thermosoudable (60) et une pluralité de couches fonctionnelles (41, 42) comprenant chacune un matériau thermoplastique thermosoudable renforcé par des fibres (61, 62), comprenant les étapes de :
a) formation de ladite au moins une couche barrière interne étanche (3) ;
b) formation de la pluralité de couches fonctionnelles (41, 42) en enroulant des rubans fonctionnels successifs sur ladite barrière interne étanche, chaque couche fonctionnelle (41, 42) comprenant un matériau thermoplastique thermosoudable renforcé par des fibres, dans lequel au moins deux couches fonctionnelles (41, 42) de la pluralité de couches fonctionnelles comprennent différents matériaux thermoplastiques renforcés par des fibres (61, 62) et dans lequel le matériau thermoplastique (P1) de l'au moins une couche barrière interne (3) et les matériaux thermoplastiques des couches fonctionnelles (P1, P2) ont des points de fusion situés dans une plage de température de 40 °C, la plage de température de 40 °C étant située entre 100 °C et 400 °C ;
c) consolidation des couches fonctionnelles (41, 42) et de l'au moins une couche barrière (3) en formant ainsi une structure de paroi consolidée monolithique (2) avec une continuité entre les matériaux thermoplastiques (60) de la couche barrière (3) et les matériaux thermoplastiques thermosoudables renforcés par des fibres (61, 62) des couches fonctionnelles (41, 42).

2. Procédé selon la revendication 1, dans lequel l'enroulement d'un ruban fonctionnel courant (30) est effectué de telle sorte que les enroulements successifs du ruban fonctionnel courant chevauchent sur au moins une distance de chevauchement latéral (W1) un enroulement parallèle précédent du ruban fonctionnel courant et un enroulement parallèle suivant du ruban fonctionnel courant, exerçant ainsi une pression sur l'au moins une couche barrière (3), les enroulements précédents du ruban fonctionnel courant et/ou les rubans fonctionnels précédemment enroulés, de sorte que les enroulements des rubans fonctionnels successifs sont pressés étroitement contre la couche barrière (3) et les uns contre les autres, de sorte que les matériaux de ces enroulements successifs peuvent être consolidés au niveau de leurs surfaces de contact.

3. Procédé selon la revendication 1 ou 2, dans lequel l'étape a) de formation de l'au moins une couche barrière interne (3) est réalisée par l'enroulement d'au moins un ruban barrière (30) directement autour d'un mandrin (7), couvrant ainsi complètement une zone prédéfinie de la surface externe arrondie du mandrin.

4. Procédé selon la revendication 3, dans lequel l'enroulement du ruban barrière est appliqué de telle sorte que les enroulements successifs de ruban barrière chevauchent sur au moins une distance de chevauchement latéral un enroulement de ruban barrière parallèle précédemment enroulé et un enroulement de ruban barrière parallèle enroulé suivant.

5. Procédé selon la revendication 3 ou 4, dans lequel l'étape a) comprend la formation d'une pluralité de couches barrières (310, 311) comprenant l'enroulement successif d'une pluralité de rubans barrières autour dudit mandrin, chaque couche barrière comprenant un matériau thermoplastique (60, 602), dans lequel au moins deux couches barrières (310, 311) de la pluralité de couches barrières comprennent des matériaux thermoplastiques (60, 602) différents et dans lequel les matériaux thermoplastiques (60, 602) de la pluralité de couches barrières (310, 311) ont des points de fusion situés dans la plage de température de 40 °C.

6. Procédé selon l'une quelconque des revendications 1 à 5, dans lequel au moins une couche fonctionnelle (41) comprend un matériau thermoplastique renforcé par des fibres comprenant un matériau thermoplastique et des fibres, le rapport en poids (Q) entre la quantité de matériau thermoplastique et la quantité de fibres dans le matériau thermoplastique renforcé par des fibres variant le long de l'épaisseur (T) de l'au moins une couche fonctionnelle (41).

7. Procédé selon la revendication 6, dans lequel l'étape de formation de l'au moins une couche fonctionnelle comprend l'enroulement d'un ruban fonctionnel comprenant le matériau thermoplastique renforcé par des fibres, le ruban fonctionnel ayant un rapport en poids entre la quantité de fibres et la quantité de matériau thermoplastique variant le long du ruban.

8. Procédé selon la revendication 1 à la revendication 7, dans lequel deux matériaux thermoplastiques renforcés par des fibres (63, 64) de deux couches fonctionnelles (41, 42) comprennent des fibres de matériaux différents.

9. Procédé selon la revendication 1 à la revendication 8, dans lequel deux matériaux thermoplastiques renforcés par des fibres (63, 64) de deux couches fonctionnelles (41, 42) comprennent des matériaux thermoplastiques différents.

10. Procédé selon la revendication 1 à la revendication 9, dans lequel deux matériaux thermoplastiques renforcés par des fibres (64, 64) de deux couches fonctionnelles (42, 43) ont des rapports (Q) différents entre leur quantité respective de fibres et leur quantité respective de matériau thermoplastique.

11. Procédé selon l'une quelconque de la revendication 1 à la revendication 10, dans lequel la formation d'au moins deux couches fonctionnelles adjacentes comprend l'enroulement d'un ruban multifonctionnel, le ruban multifonctionnel comprenant au moins deux rubans fonctionnels joints bout à bout.

12. Récipient étanche **caractérisé en ce qu'**il est produit selon l'un quelconque des procédés énoncés dans l'une quelconque des revendications précédentes, dans lequel la couche barrière (3) et les couches fonctionnelles (41, 42) forment une structure rigide unitaire.

13. Récipient étanche selon la revendication 12, le récipient sous pression étant un réservoir de carburant pour un véhicule motorisé (CR).
